# FASCICULE DE BREVET EUROPEEN

(11) **EP 2 900 523 B1**
(45) Date de publication et mention de la délivrance du brevet: **30.05.2018**
(21) Numéro de dépôt: 13773287.1
(22) Date de dépôt: 19.08.2013
(51) Int. Cl.: B60R 22/18

(54) **SUPPORT D'ENROULEUR DE CEINTURE DE SECURITE A DEFORMATION PROGRAMMEE**
SITZGURTANLEGEHILFE MIT PROGRAMMIERTER VERFORMUNG
SEATBELT WINDER SUPPORT WITH PROGRAMMED DEFORMATION

(30) Priorité: 27.09.2012 FR 1259100
(43) Date de publication de la demande: 05.08.2015
(73) Titulaire: PSA Automobiles SA, 78300 Poissy (FR)
(72) Inventeur: DESPLANCHES, Patrice, F-78100 Saint Germain en Laye (FR); BENANE, Said, F-94550 Chevilly Larue (FR)
(86) Numéro de dépôt international: PCT/FR2013/051946
(87) Numéro de publication internationale: WO 2014/049217

(56) Documents cités:
- FR-A1- 2 862 034
- FR-A1- 2 975 353
- GB-A- 2 379 419

## Description

L'invention concerne un support destiné à supporter un enrouleur de ceinture de sécurité disposé à l'intérieur d'un véhicule, notamment pour passager arrière.

Actuellement, les dispositifs de retenue de passagers arrière d'un véhicule sont largement connus. La publication FR2862034 décrit par exemple un dispositif de retenue de passager arrière constitué d'une ceinture de sécurité et d'un moyen d'enroulement automatique de la ceinture. Pour utiliser ce moyen de retenue, le passager tire la ceinture de manière à la dérouler et la faire passer devant lui, et ensuite l'accroche sur un moyen de verrouillage prévu à cet effet au niveau de l'assise de son siège. Le dispositif d'enroulement de la ceinture est positionné dans la zone arrière de l'habitacle, à proximité d'un montant de structure de la caisse du véhicule et derrière le dossier du siège du passager arrière, de manière à ce que la ceinture passe au-dessus du dossier. L'enrouleur est fixé sur un support plan en profilé de tôle orienté suivant un plan approximativement parallèle au plan horizontal du véhicule. Cette tôle est fixée par son bord à la paroi intérieure de la structure du véhicule. En cas de choc, l'effort de retenue des passagers par la ceinture est transmis au support en tôle via l'enrouleur. La forme plane du support d'enrouleur et son orientation par rapport à l'effort de retenu du passager vont limiter ses capacités à se déformer, générant des efforts important au niveau de ses points de fixation avec la structure du véhicule. Ces efforts importants aux points de fixation vont faire apparaître des risques d'arrachement et donc une baisse de l'efficacité du moyen de retenue. On connait aussi dans l'art antérieur des supports d'enrouleur de ceinture de sécurité de forme plane, approximativement parallèles aux axes longitudinaux et transversaux du véhicule, et recevant l'enrouleur sur leur face supérieure. Leur conception similaire au document FR2862034 génère le même problème de risque d'arrachement.

Le document GB2379419 décrit un véhicule automobile comportant un support d'enrouleur selon le préambule de la revendication 1. Les solutions de l'art antérieur ne permettent pas d'assurer une limitation des efforts transmis au niveau des points de fixation du support d'enrouleur avec la structure latérale du véhicule.

La présente invention propose une conception particulière de la pièce qui constitue un support d'enrouleur, positionnée en arrière d'un dossier de siège, simple à mettre en oeuvre, constituée d'un nombre limité de pièces, et assurant une déformation particulière du support d'enrouleur permettant de limiter les efforts aux niveaux des points de fixation de ce support avec la structure du véhicule lors de la retenue des passagers par la ceinture de sécurité en cas de choc.

Conformément à cet objectif, il est proposé un véhicule automobile comportant un support d'enrouleur définit par les caractéristiques de la revendication 1. Selon une variante de l'invention, le support d'enrouleur comporte une troisième plaque s'étendant dans le prolongement de la plaque de réception à partir du bord opposé à la deuxième plaque, et non parallèle à la plaque de réception.

Selon une autre variante de l'invention, un moyen de verrouillage destiné à verrouiller le dossier d'un siège peut être fixé sur la plaque de réception. Dans une variante préférée, le moyen de verrouillage peut être fixé sur la troisième plaque.

Dans un mode de réalisation préféré de l'invention, on choisit l'angle saillant entre la plaque de réception et la deuxième plaque, obtus. De préférence, cet angle saillant obtus entre les deux plaques est choisi compris entre 160 et 170 degrés pour obtenir un bon dépliage du support d'enrouleur de ceinture sans être gêné par des effets de poinçonnage. En effet, on obtient ainsi avantageusement un dépliage suffisant du support d'enrouleur, l'angle saillant entre la plaque de réception et la deuxième plaque étant suffisamment éloigné de 180 degrés tout en évitant un phénomène de poinçonnage de la deuxième plaque sur la plaque de réception lorsque cet angle est trop proche de 90 degrés et qui pourrait diminuer l'effet d'absorption d'énergie désiré, la direction de la deuxième plaque étant trop proche de la direction de déformation de la plaque de réception.

Dans une autre variante de réalisation, on pourra choisir un angle strictement aigu.

Selon un autre mode préféré de l'invention, le positionnement de la deuxième plaque est choisi de sorte que la ligne de la pliure est sensiblement parallèle à l'axe transversal du véhicule.

Selon un autre mode de réalisation l'invention, la plaque de réception est positionnée sensiblement parallèle au plan horizontal du véhicule défini par les axes longitudinaux et transversaux dudit véhicule.

Dans une variante comportant une troisième plaque, selon un mode préféré de l'invention, cette troisième plaque est positionnée de manière à être parallèle à la face arrière du dossier de siège et en contact avec ce dos de dossier lorsqu'il est en position d'utilisation pour accueillir un passager assis. Selon l'invention, le support d'enrouleur comporte des moyens de fixation à la structure latérale du véhicule, positionnés sur un de ses côtés latéraux en prenant comme référence le sens du véhicule. Cette configuration permet de conserver le côté opposé à celui comportant ces moyens de fixation libre de toute fixation, et donc capable de bouger au moment où les efforts de retenue du passager sont remontés au niveau du support de l'enrouleur, permettant la déformation au niveau de la pliure de ce support. Dans un mode alternatif de ce mode de réalisation, des moyens de fixation à la structure du véhicule sont prévus sur l'extrémité avant ou arrière du support d'enrouleur, ou, selon l'invention, au niveau de ces deux extrémités, en prenant comme référence le sens du véhicule. Dans un autre mode de réalisation le support d'enrouleur comporte des moyens de fixation à la structure du véhicule positionnés uniquement sur ces deux extrémités avant et arrière en prenant comme référence le sens du véhicule.

Ainsi, même en étant fixé par deux ou trois de ses côtés, le support d'enrouleur conserve une bonne aptitude à se déformer sous l'action de l'effort provenant de l'enrouleur et issu de la retenue du passager par la ceinture de sécurité, tout en conservant une construction simple à mettre en oeuvre, avec un minimum de pièces et donc légère.

D'autres particularités et avantages de l'invention apparaitront encore tout au long de la description ci-après. Aux dessins annexes, donnés à titre d'exemple, non limitatifs:
- la figure 1 représente schématiquement l'implantation du support d'enrouleur (1) dans le véhicule et son environnement suivant un vue latérale de l'intérieur du véhicule, derrière la banquette arrière du véhicule.
- la figure 2 est une vue schématique en perspective latérale avant du support d'enrouleur suivant un mode de réalisation comportant trois plaques
- la figure 3 représente une vue schématique latérale de l'enrouleur, son support et l'extrémité de la ceinture dans une situation où la ceinture ne génère pas d'effort important sur l'enrouleur
- la figure 4 représente une vue selon la figure 3 du support d'enrouleur déformé sous l'action de la remontée d'effort transmis par l'enrouleur et la ceinture de sécurité retenant le passager.

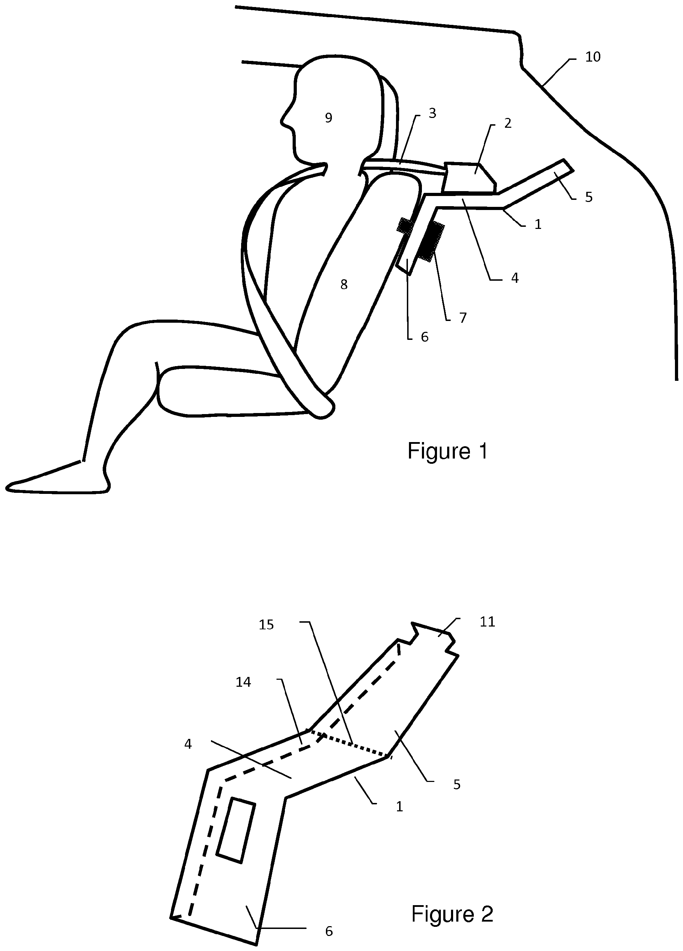

Sur la figure 1, le support d'enrouleur 1 constitué d'un profilé de tôle est représenté dans sa forme à trois plaques. Ce profilé est conformé pour comporter une plaque de réception 4 sur laquelle est placé un enrouleur de ceinture 2, une deuxième plaque 5 dans le prolongement de la plaque de réception 4, formant un angle saillant obtus par rapport à la plaque de réception 4 par une ligne de pliure 15. Cette deuxième plaque 5 est orientée du même côté de la plaque de réception 4 qui reçoit l'enrouleur de ceinture 2. Une troisième plaque 6 s'étend dans le prolongement de la plaque de réception 4 et du côté opposé de la deuxième plaque 5, et est orientée de manière à s'étendre parallèlement au dos du dossier de siège 8 du passager 9 qui sera retenu par la ceinture de sécurité 3. Cette plaque 6 sert dans l'exemple proposé de butée pour le dossier de siège 8 et supporte un moyen de verrouillage 7 du dossier de siège 8 en position relevé. D'autres positions du système de verrouillage peuvent être envisagées, comme par exemple un positionnement directement sur la plaque de réception 4. La plaque de réception 4 est représentée parallèle au plan horizontal du véhicule, plan défini par les axes longitudinaux et transversaux du véhicule, et l'enrouleur 2 est positionné au-dessus de la plaque de réception 4, par rapport au référentiel du véhicule, la plaque 5 s'étendant par conséquence aussi au-dessus de la plaque de réception 4. Une solution proposant un positionnement de l'enrouleur 2 sous la plaque de réception 4 est tout aussi envisageable, la deuxième plaque 5 s'étendant alors en dessous de la plaque de réception 4.

La figure 2 représente le support d'enrouleur 1 seul. La plaque 6 peut comporter une lumière permettant le passage d'un système de verrouillage de la banquette. La fixation du support avec la structure du véhicule 10 peut être réalisée par les différents moyens connus par l'homme du métier pour fixer un profilé de tôle sur un élément de structure de véhicule. Par exemple, un bord tombé 14 sur la partie latérale du support d'enrouleur 1 ainsi qu'une patte 11 sur l'extrémité arrière libre de la deuxième plaque 5 sont réalisés de manière à fixer le support d'enrouleur 1 par points de soudage sur la structure 10 du véhicule.

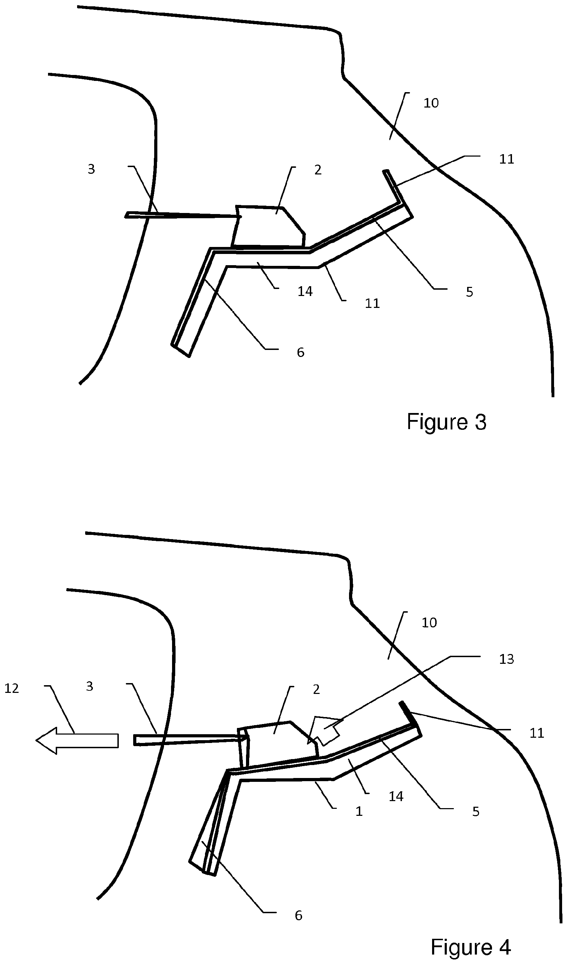

La figure 3 montre le support d'enrouleur 1 et sa position lorsqu'aucun effort important n'est appliqué sur l'enrouleur 2 par la ceinture de sécurité 3.

La figure 4 montre, suivant la même vue latérale intérieure que la figure 3, la déformation du support d'enrouleur 1 au niveau de la pliure 15 entre la plaque 4 de réception et la deuxième plaque 5 lors d'un choc avant, pendant les instants où la ceinture 3 retient le passager. L'effort de la ceinture 3 représentée par la flèche 12 génère un effort de l'enrouleur 2 représenté par la flèche 13 sur le support d'enrouleur 1. Cet effort 12 va avoir une composante normale à la plaque de réception 4 et une autre composante parallèle à cette plaque de réception 4. Le fait d'avoir laissé au moins l'un des côtés du support d'enrouleur 1 libre de fixation, associé à l'angle entre la plaque de réception 4 et la deuxième plaque 5, permet une déformation du support d'enrouleur 1, au niveau de la pliure 15. Les efforts transmis vers les points de fixation avec la structure 10 du véhicule sont réduits par dissipation de l'énergie dans la déformation du support selon l'invention.

## Revendications

1. Véhicule automobile comportant un support d'enrouleur (1) positionné dans une zone située en arrière du dossier (8) d'un siège de véhicule par rapport au sens dudit véhicule, fixé sur un des éléments de structure du véhicule, le support (1) d'enrouleur étant constitué d'un profilé de tôle fixé par au moins un de ses bords sur une partie de la structure intérieure (10) du véhicule, le support étant conformé pour former au moins deux plaques, une plaque de réception (4) destinée à recevoir l'enrouleur (2) et une deuxième plaque (5) positionnée dans le prolongement de la plaque de réception (4), les deux plaques (4) et (5) étant situées dans des plans non parallèles entre eux par une pliure (15) dudit profilé, l'axe longitudinal du support d'enrouleur (1) défini par une droite passant par les barycentres respectifs de la plaque de réception (4) et de la deuxième plaque (5) étant sensiblement parallèle au plan défini par l'axe longitudinal et vertical du véhicule, la plaque de réception (4) étant positionnée devant la pliure (15) par rapport au sens du véhicule, **caractérisé en ce que** la deuxième plaque (5) est orientée du côté de la plaque de réception (4) qui reçoit l'enrouleur (2), de sorte qu'un effort ayant au moins une composante sensiblement normale à la plaque de réception (4), orienté du même côté de la plaque de réception (4) qui reçoit l'enrouleur (2), génère une déformation du support d'enrouleur (1) au niveau de la pliure (15), la valeur de l'angle aigu entre la plaque de réception (4) et le plan horizontal du véhicule défini par l'axe longitudinal et transversal dudit véhicule est inférieure à la valeur de l'angle aigu entre la deuxième plaque (5) avec ce même plan horizontal, et le support d'enrouleur (1) est fixé par des moyens de fixation à la structure latérale (10) du véhicule, ces moyens de fixation étant positionnés au niveau des extrémités avant et arrière dudit support et sur un de ses côtés latéraux en prenant comme référence le sens du véhicule.

2. Véhicule suivant la revendication 1, **caractérisé en ce que** le support (1) comporte une troisième plaque (6) s'étendant dans le prolongement de la plaque de réception (4) à partir du bord opposé à la deuxième plaque (5), et non parallèle à la plaque de réception (4).

3. Véhicule suivant la revendication 2, **caractérisé en ce qu'**un moyen de verrouillage (7) destiné à verrouiller le dossier de siège (8) est fixé sur la troisième plaque (6).

4. Véhicule suivant au moins l'une des revendications de 1 à 3, **caractérisé en ce que** l'angle saillant formé entre la plaque de réception (4) et la deuxième plaque (5) est obtus.

5. Véhicule suivant la revendication 4 **caractérisé en ce que** l'angle entre la plaque de réception (4) et la deuxième plaque (5) a une valeur comprise entre 160 et 170 degrés.

6. Véhicule automobile suivant l'une des revendications de 1 à 5, **caractérisé en ce que** la pliure (15) entre la plaque de réception (4) et la deuxième plaque (5) est sensiblement parallèle à l'axe transversal du véhicule.

7. Véhicule automobile suivant l'une des revendications de 1 à 6, **caractérisé en ce que** la plaque de réception (4) est sensiblement parallèle au plan défini par les axes longitudinaux et transversaux du véhicule.

## Patentansprüche

1. Kraftfahrzeug, einen Aufrollerhalter (1) umfassend, der in einem Bereich hinter der Rückenlehne (8) eines Fahrzeugsitzes relativ zur Richtung des Fahrzeugs angeordnet ist, an einem der Strukturelemente des Fahrzeugs befestigt ist, wobei der Aufrollerhalter (1) aus einem Blechprofil besteht, das mit mindestens einer seiner Kanten an einem Teil der inneren Struktur (10) des Fahrzeugs befestigt ist, wobei der Halter so geformt ist, dass er mindestens zwei Platten bildet, eine Aufnahmeplatte (4), die zur Aufnahme des Aufrollers (2) bestimmt ist, und eine zweite Platte (5), die in der Verlängerung der Aufnahmeplatte (4) angeordnet ist, wobei sich die beiden Platten (4) und (5) in Ebenen befinden, die durch einen Falz (15) des Profils nicht parallel zueinander stehen, wobei die Längsachse des Aufrollerhalters (1) durch eine Gerade definiert ist, die durch die jeweiligen Baryzentren der Aufnahmeplatte (4) und der zweiten Platte (5) verläuft und im Wesentlichen parallel zu der durch die Längs- und Vertikalachse des Fahrzeugs definierten Ebene ist, wobei die Aufnahmeplatte (4) in Bezug auf die Richtung des Fahrzeugs vor dem Falz (15) angeordnet ist, **dadurch gekennzeichnet, dass** die zweite Platte (5) an der Seite der Aufnahmeplatte (4) ausgerichtet ist, die den Aufroller (2) aufnimmt, sodass eine Kraft, die mindestens eine Komponente im Wesentlichen normal zu der Aufnahmeplatte (4) aufweist, die auf der gleichen Seite der Aufnahmeplatte (4) ausgerichtet ist, die den Aufroller (2) aufnimmt, eine Verformung des Aufrollerhalters (1) beim Falz (15) bewirkt, wobei der Wert des spitzen Winkels zwischen der Aufnahmeplatte (4) und der durch die Längs- und Querachse des Fahrzeugs definierten Horizontalebene des Fahrzeugs kleiner ist als der Wert des spitzen Winkels zwischen der zweiten Platte (5) mit dieser gleichen Horizontalebene, und der Aufrollerhalter (1) durch Befestigungsmittel an der Seitenstruktur (10) des Fahrzeugs befestigt ist, wobei diese Befestigungsmittel am vorderen und hinteren Ende des Halters und an einer seiner Lateralseiten angeordnet sind, wobei die Richtung des Fahrzeugs als Referenz dient.

2. Fahrzeug nach Anspruch 1, **dadurch gekennzeichnet, dass** der Halter (1) eine dritte Platte (6) umfasst, die sich in der Verlängerung der Aufnahmeplatte (4) von der der zweiten Platte (5) gegenüberliegenden Kante und nicht parallel zur Aufnahmeplatte (4) erstreckt.

3. Fahrzeug nach Anspruch 2, **dadurch gekennzeichnet, dass** an der dritten Platte (6) eine Verriegelungseinrichtung (7), die zur Verriegelung der Sitzlehne (8) bestimmt ist, befestigt ist.

4. Fahrzeug nach mindestens einem der Ansprüche 1 bis 3, **dadurch gekennzeichnet, dass** der zwischen der Aufnahmeplatte (4) und der zweiten Platte (5) gebildete Außenwinkel stumpf ist.

5. Fahrzeug nach Anspruch 4, **dadurch gekennzeichnet, dass** der Winkel zwischen der Aufnahmeplatte (4) und der zweiten Platte (5) einen Wert zwischen 160 und 170 Grad aufweist.

6. Kraftfahrzeug nach einem der Ansprüche 1 bis 5, **dadurch gekennzeichnet, dass** der Falz (15) zwischen der Aufnahmeplatte (4) und der zweiten Platte (5) im Wesentlichen parallel zur Querachse des Fahrzeugs verläuft.

7. Kraftfahrzeug nach einem der Ansprüche 1 bis 6, **dadurch gekennzeichnet, dass** die Aufnahmeplatte (4) im Wesentlichen parallel zu der durch die Längs- und Querachse des Fahrzeugs definierten Ebene steht.

## Claims

1. Motor vehicle comprising a retractor support (1) positioned in a zone situated behind the backrest (8) of a vehicle seat in relation to the direction of said vehicle, secured on one of the structural elements of the vehicle, the retractor support (1) being constituted of a sheet metal profile secured by at least one of the edges thereof on a part of the inside structure (10) of the vehicle, the support being conformed to form at least two plates, one receiving plate (4) intended to receive the retractor (2) and a second plate (5) positioned in the extension of the receiving plate (4), the two plates (4) and (5) being situated in non-parallel planes between each other by a folding (15) of said profile, the longitudinal axis of the retractor support (1) defined by a straight line passing through the respective barycentres of the receiving plate (4) and of the second plate (5) being substantially parallel to the plane defined by the longitudinal and vertical axis of the vehicle, the receiving plate (4) being positioned in front of the folding (15) in relation to the direction of the vehicle, **characterised in that** the second plate (5) is oriented on the side of the receiving plate (4) which receives the retractor (2), such that a force having at least one substantially normal component to the receiving plate (4), oriented on the same side of the receiving plate (4) which receives the retractor (2), generates a deformation of the retractor support (1) at the level of the folding (15), the acute angle value between the receiving plate (4) and the horizontal plane of the vehicle defined by the longitudinal and transverse axis of said vehicle being less than the acute angle value between the second plate (5) with this same horizontal plane, and the retractor support (1) being secured by securing means to the lateral structure (10) of the vehicle, these securing means being positioned at the level of the front and rear ends of said support and on one of the lateral sides thereof, taking the direction of the vehicle as reference.

2. Vehicle according to claim 1, **characterised in that** the support (1) comprises a third plate (6) extending into the extension of the receiving plate (4) from the edge opposite to the second plate (5) and non-parallel to the receiving plate (4).

3. Vehicle according to claim 2, **characterised in that** a locking means (7) intended to lock the seat backrest (8) is secured on the third plate (6).

4. Vehicle according to at least one of claims 1 to 3, **characterised in that** the protruding angle formed between the receiving plate (4) and the second plate (5) is obtuse.

5. Vehicle according to claim 4, **characterised in that** the angle between the receiving plate (4) and the second plate (5) has a value of between 160 and 170 degrees.

6. Motor vehicle according to one of claims 1 to 5, **characterised in that** the folding (15) between the receiving plate (4) and the second plate (5) is substantially parallel to the transverse axis of the vehicle.

7. Motor vehicle according to one of claims 1 to 6, **characterised in that** the receiving plate (4) is substantially parallel to the plane defined by the longitudinal and transverse axes of the vehicle.
